(19) Europäisches Patentamt
European Patent Office
Office européen des brevets

(11) EP 1 110 608 A2

(12) **EUROPÄISCHE PATENTANMELDUNG**

(43) Veröffentlichungstag:
**27.06.2001 Patentblatt 2001/26**

(51) Int Cl.[7]: **B01J 39/20**, B01J 41/14

(21) Anmeldenummer: **00126556.0**

(22) Anmeldetag: **12.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.12.1999 DE 19962935**

(71) Anmelder: **Bayer Aktiengesellschaft**
**51368 Leverkusen (DE)**

(72) Erfinder:
- **Happ, Michael, Dr.**
  **41542 Dormagen (DE)**
- **Born, Ralf-Jürgen, Dr.**
  **40764 Langenfeld (DE)**
- **Klipper, Reinhold, Dr.**
  **50933 Köln (DE)**
- **Schnegg, Ulrich, Dr.**
  **51377 Leverkusen (DE)**
- **Soest, Hans-Karl**
  **51147 Köln (DE)**
- **Zarges, Wolfgang, Dr.**
  **51069 Köln (DE)**

(54) **Verfahren zur Herstellung von vernetzten Ionenaustauschern auf Basis von ungesättigten, aliphatischen Nitrilen**

(57) Die vorliegende Erfindung betrifft ein Verfahren zur Herstellung von vernetzten Ionenaustauschern mit homogener Netzwerkstruktur auf Basis ungesättigter, aliphatischer Nitrile in Gegenwart von filmbildenden Schutzkolloiden.

EP 1 110 608 A2

## Beschreibung

Die vorliegende Erfindung betrifft ein Verfahren zur Herstellung von vernetzten Ionenaustauschern mit homogener Netzwerkstruktur auf Basis von ungesättigten, aliphatischen Nitrilen in Gegenwart von filmbildenden Schutzkolloiden, das jedoch nicht als seed/feed- oder Saatzulauf-Verfahren durchgeführt wird.

Bei der Copolymerisation von zwei oder mehreren Monomeren entstehen in den meisten Fällen Polymere, deren Zusammensetzung sich mit dem Umsatz mehr oder weniger stark verändert. Je nach Polymerisationstyp unterscheidet man zwei Arten von Heterogenität.

Ist die Lebensdauer der aktiven Gruppe an der Polymerkette gleich der Polymerisationsdauer, wie bei der anionischen Polymerisation, ändert sich die Zusammensetzung entlang der Kette. Während der Polymerisation haben alle Polymerketten zu jedem Zeitpunkt stets die gleiche Bruttozusammensetzung.

Ist die Lebensdauer der aktiven Gruppe an der Polymerkette wesentlich kleiner als die gesamte Reaktionszeit, beobachtet man eine mit fortschreitendem Polymerisationsumsatz sich ändernde Zusammensetzung der Polymerketten. Diese zweite Art der Heterogenität ist typisch für radikalische Polymerisationsreaktionen, bei denen die Lebensdauer der wachsenden Polymerradikale im Sekunden- und die Polymerisationsdauer im Stundenbereich liegt.

Für viele Anwendungen ist diese Heterogenität mit Nachteilen verbunden. Im Fall der Adsorberharze und Ionenaustauscher, die vernetzte Perlpolymerisate darstellen, sind unvernetzte oder sehr schwach vernetzte Anteile höchst unerwünscht. Diese entstehen immer, wenn der Vemetzer überproportional eingebaut wird und im Verlauf der Polymerisation stark verarmt. Ein typisches Beispiel dafür ist die Kombination Acrylnitril/Divinylbenzol. Daraus hergestellte Perlpolymerisate und/oder schwach saure Ionenaustauscher enthalten erhebliche Mengen an unvernetzten Polymeren, die ausbluten können und mechanisch und osmotisch instabile Produkte liefern. Man versucht die Verarmung des Vernetzers während der Polymerisation dadurch zu kompensieren, dass man entweder einen Zweitvemetzer verwendet, der nur langsam eingebaut wird, oder den rasch verarmenden Vernetzer (hier Divinylbenzol) nachdosiert. Als Zweitvernetzer werden in der Praxis Di- und Triallylverbindungen wie Octadien-(1,7) oder Trivinylcyclohexan eingesetzt. Diese Stoffe werden nur unvollständig umgesetzt und müssen sorgfältig entfernt werden, um Beeinträchtigungen durch das Harz bei der späteren Anwendung zu vermeiden. Nachdosierungen des Vernetzers sind schwierig und erfordern eine ausgefeilte Dosierstrategie, außerdem ist man in der Auswahl der Suspensionsstabilisatoren eingeschränkt. Schutzkolloide, wie Gelatine, Polyvinylalkohol oder Cellulosederivate, die häufig bei der Perlpolymerisation eingesetzt werden, behindern als filmbildende Substanzen das Eindiffundieren des Vemetzers in die polymerisierenden Perlen und sind ungeeignet (EP-A-0 098 130).

Es besteht daher ein großes Interesse an einem Verfahren, das die oben geschilderten Nachteile nicht besitzt. Überraschenderweise wurde gefunden, dass ungesättigte, aliphatische Nitrile wie Acrylnitril in Kombination mit Di- und Poly-Vinylethern von Alkandiolen oder Glykolen ein sehr homogenes Netzwerk aufbauen und Produkte liefern, die die oben geschilderten Nachteile nicht aufweisen. Auf eine Nachdosierung des Vemetzers oder den Einsatz eines Zweitvernetzers kann verzichtet werden.

Die Verwendung von Di- und Polyvinylethern zur Vernetzung von Polymeren ist im Stand der Technik bereits bekannt.

EP-A-0 010 265 beschreibt die Herstellung von Kunstharzen auf Basis vernetzter Mischpolymerisate aus Mono- und Polyvinylverbindungen. Wesentliches Merkmal der Erfindung ist die gemeinsame Verwendung zweier Vernetzer, die sich bereits in der Zusammenfassung findet: Methacrylsäureester mehrwertiger Alkohole und/oder aromatische Polyvinylverbindungen und ungesättigte Kohlenwasserstoffe, die mindestens zwei Allylgruppierungen im Molekül aufweisen und/oder Polyvinylether mehrwerwertiger Alkohole. Auch findet sich ein Hinweis auf die Verwendung von Acrylnitril in den Perlpolymerisaten, wobei aber im Text bei bekannten Kunstharzen auf Acrylnitril-Basis die Hydrolyseinstabilität als schwerwiegender Nachteil beschrieben wird.

US-A-3 586 646 beschreibt die Verwendung von Divinylethern zur Herstellung von schwamm förmigen Kationenaustauschem mit Gruppen aus Sulfonsäure-, Carbonsäure-, Phosphorsäure- und Phosphonsäure-Gruppen in Gegenwart eines Porogens (organisches Lösungsmittel das das Monomere löst, für das Polymere aber ein Fällungsmittel darstellt). US-A-3 586 646 beschreibt jedoch nicht die Verwendung ungesättigter Nitrile in den Perlpolymerisaten.

EP-A-0 098 130 beschreibt die Herstellung von vernetzten Copolymerperlen, nach einem Saat/Zulauf-Verfahren ("seed/feed"), die Copolymerperlen selbst und ihre Verwendung als Adsorber oder, nach Einführung oder Addition von funktionellen Gruppen, als Ionenaustauscherharze. Als Monomere für Saat und/oder Zulauf werden u.a. Nitrile der Acryl- und/oder Methacrylsäure genannt, als Vernetzer u.a. Polyvinylether von Glykol, Glycerin, Pentaerythrit, Resorcin und Monothio- und Dithioderivate von Glykolen. Die Herstellung der Seed/Feed-Teilchen erfordert die Abwesenheit oder die drastische Verminderung von Schutzkolloiden, da diese das Aufsaugen der Feed-Komponente durch die Seed-Teilchen verhindern oder dramatisch verzögern. Außerdem zeigen die nach EP-A-0 098 130 hergestellten Teilchen ein mehrstufiges Quellverhalten in Toluol und eine Doppelbrechung in Form eines Malteserkreuzes unter polarisiertem Licht.

Keine der zitierten Patentanmeldungen/Patente gibt einen Hinweis, wie Monomere und Vemetzer ausgewählt

werden müssen, um vemetzte Perlpolymerisate mit homogener Netzwerkstruktur zu erhalten, insbesondere in Gegenwart von filmbildenden Schutzkolloiden.

Aufgabe der vorliegenden Erfindung war die Herstellung von Ionenaustauschern, bevorzugt von schwach sauren Kationenaustauschem, auf Basis von ungesättigten, aliphatischen Nitrilen in Gegenwart von filmbildenden Schutzkolloiden, die eine homogene Netzwerkstruktur aufweisen.

Die Lösung der Aufgabe und damit die vorliegende Erfindung betrifft ein Verfahren zur Herstellung von vemetzten Ionenaustauschern, dadurch gekennzeichnet, dass man

a) ungesättigte, aliphatische Nitrile mit Di- oder Polyvinylethern als Vernetzern und zusätzlich Initiatoren in Suspension in Gegenwart von Schutzkolloiden jedoch nicht in seed/feed- oder Saat-Zulauf-Verfahren zu Perlpolymerisaten polymerisiert und

b) diese zu Ionenaustauschern funktionalisiert.

Gegebenenfalls können der Polymerisationsreaktion weitere Monovinylverbindungen und/oder weitere Vemetzer und/oder Porogen hinzugefügt werden.

Die durch Verfahrensschritt a) hergestellten Perlpolymerisate sind ebenfalls Gegenstand der vorliegenden Erfindung. Sie weisen eine homogene Netzstruktur auf und können als Adsorberharze eingesetzt werden.

In der Verfahrensstufe b) werden die Perlpolymerisate nach üblichen und für den Fachmann bekannten Methoden zu Ionenaustauschern, insbesondere zu schwach sauren Kationenaustauschern, funktionalisiert. Zur Herstellung der schwach sauren Kationenaustauscher werden die im Verfahrensschritt a) erhaltenen Perlpolymerisate unter alkalischen Bedingungen verseift, gegebenenfalls umgeladen und gereinigt. In der Praxis hat sich die alkalische Verseifung als besonders effektiv und wirtschaftlich erwiesen. Die nach dem erfindungsgemäßen Verfahren bevorzugt erhaltenen schwach sauren Kationenaustauscher zeigen eine besonders hohe Kapazität.

Ungesättigte, aliphatische Nitrile im Sinne des Verfahrensschrittes a) der vorliegenden Erfindung sind charakterisiert durch die allgemeine Formel (I)

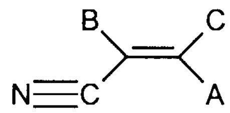

(I),

worin A, B und C jeweils unabhängig voneinander für Wasserstoff, Alkyl oder Halogen stehen.

Alkyl bedeutet im Sinne der vorliegenden Erfindung geradkettige oder verzweigte Alkylreste mit 1 bis 8 Kohlenstoffatomen, bevorzugt mit 1 bis 4 Kohlenstoffatomen. Halogen bedeutet im Sinne der vorliegenden Erfindung Chlor, Fluor und Brom.

Bevorzugte Nitrile im Sinne der vorliegenden Erfindung sind Acryl- oder Methacrylnitril, besonders bevorzugt wird Acrylnitril eingesetzt.

Geeignete Divinylether im Sinne des Verfahrensschrittes a) der vorliegenden Erfindung sind Verbindungen der allgemeinen Formel (II)

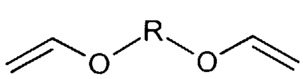

(II),

worin

R für einen Rest der Reihe $C_nH_{2n}$ ,$(C_mH_{2m}\text{-}O)_p\text{-}C_mH_{2m}$ oder $CH_2\text{-}C_6H_4\text{-}CH_2$ steht und $n \geq 2$, $m = 2$ bis 8 und $p \geq 2$ bedeuten.

Geeignete Polyvinylether im Sinne des Verfahrensschrittes a) der vorliegenden Erfindung sind Trivinylether von Glycerin, Trimethylolpropan oder Tetravinylether des Pentaerythrits.

Bevorzugt werden Divinylether von Ethylenglykol, Di-, Tetra- und Poly-Ethylenglykol, Butandiol und Poly-THF oder die Tri- und Tetravinylether eingesetzt. Besonders bevorzugt sind die Divinylether von Butandiol und Diethylenglykol.

Gegebenenfalls können auch weitere Monovinylverbindungen und/oder weitere Vernetzer eingesetzt werden.

Geeignete Monomere im Sinne der vorliegenden Erfindung sind Styrol und Styrolderivate, Acryl- und Methacrylsäure oder ihre Ester, Amide oder Anhydride, Vinylchlorid, Vinylidenchlorid, Vinylacetat und Vinylpyrrolidon.

Geeignete weitere Vernetzer im Sinne der vorliegenden Erfindung sind Divinylbenzol, Di- und Poly(meth) acrylsäureester von Glykolen, Alkandiolen mit C ≥3, Glycerin, Trimethylolpropan oder Pentaerithrit, Octadien-(1,7) oder Trivinylcyclohexan. Bevorzugt wird Divinylbenzol eingesetzt. Zur Erhöhung der Porosität der Perlen können Porogene eingesetzt werden. Als Porogene im erfindungsgemäßen Verfahren sind organische Lösungsmittel geeignet, in denen die Monomere löslich sind, die aber das entstandene Polymerisat schlecht lösen bzw. quellen. Beispielhaft seien genannt, Verbindungen der Reihe Ketone, wie Methylisobutylketon, Methylethylketon oder Kohlenwasserstoffe wie Hexan, Octan, Isooctan und Isododecan oder Alkohole mit $\geq C_4$, wie Butanole (Farbenfabriken Bayer, DBP 1 045 102 [1957] DBP 1 113 570 [1957].

Die Herstellung der gemäß der vorliegenden Erfindung bevorzugten schwach sauren Kationenaustauscher ist dadurch gekennzeichnet, dass man

α) ungesättigte, aliphatische Nitrile der allgemeinen Formel (I) mit Di- oder Polyvinylethern sowie gegebenenfalls weiteren Vernetzern und Initiatoren in Suspension in Gegenwart von Schutzkolloiden zu Perlpolymerisaten polymerisiert,
β) das Perlpolymerisat, bevorzugt im Autoklaven, alkalisch verseift,
γ) die Perlpolymerisate, bevorzugt in einer Säule, von der Salz-, bevorzugt Na-, in die H-Form mit verdünnter Mineralsäure, bevorzugt 10%iger $H_2SO_4$, umlädt,
δ) gegebenenfalls die H-Form im Autoklaven mit Wasser reinigt und schließlich
ε) gegebenenfalls die Klassierung in der Säule auf den gewünschten Korngrößenbereich vornimmt.

Bei Bedarf kann auch eine Siebung des Perlpolymerisats durchgeführt werden.

Die Suspensionspolymerisation gemäß der vorliegenden Erfindung wird in Gegenwart von Schutzkolloiden und gegebenenfalls in Gegenwart von Dispergatoren durchgeführt. Empfehlenswert ist die Verwendung von salzstabilen Verbindungen wie Hydroxyethylcellulose und Kondensationsprodukten von Naphthalinsulfonsäure mit Formaldehyd in Gegenwart von Alkali- oder Erdalkali-Salzen der Halogenwasserstoffsäuren oder Schwefelsäure, insbesondere bevorzugt von NaCl, $Na_2SO_4$ oder $CaCl_2$. Die Salze verringern die Löslichkeit der Monomeren in der wässrigen Phase. Zur Verringerung der Agglomeratbildung können pH-Puffer aus Borat oder Phosphat zugesetzt werden. Als Radikalinitiatoren geeignet im Sinne der vorliegenden Erfindung sind Peroxide, Hydroperoxide, Persäureester, Azo-Initiatoren und andere Initiatoren mit Halbwertszeiten $t_{1/2}$ = 1 h zwischen 60 und 140°C (Firmenschrift AKZO Nobel, Initiators for High Polymers). Für das erfindungsgemäße Verfahren bevorzugt geeignete Initiatoren sind beispielsweise Peroxyverbindungen wie Dibenzoylperoxid, Dilaurylperoxid, Bis-(p-chlorbenzoylperoxid), Dicyclohexylperoxydicarobnat, tert.-Butylperoctoat, tert.-Butylperoxy-2-ethylhexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril). Bevorzugte Inititatoren weisen Halbwertzeichen $t_{1/2}$ = 1 h zwischen 75 und 110°C auf. Besonders bevorzugt werden Dibenzoylperoxid, tert.-Butylperoxi-2-ethylhexanoat und Azoisobutyronitril eingesetzt.

Die Polymerisation wird vorzugsweise in 2 Stufen ausgeführt. Zunächst wird die Hauptreaktion bei einer Temperatur von 50 bis 80°C durchgeführt und anschließend bei erhöhter Temperatur komplettiert. Besonders bevorzugt wird eine Polymerisation bei 65 bis 75°C mit anschließender Erhöhung der Temperatur auf 85 bis 100°C durchgeführt.

Zur Herstellung der gemäß der vorliegenden Erfindung bevorzugten schwach sauren Ionenaustauscher werden die Perlpolymerisate im Autoklaven mit wässriger Natronlauge verseift. Bevorzugt ist eine alkalische Verseifung mit wässriger/methanolischer Natronlauge. Alternativ ist auch eine drucklose Verseifung mit wässrig/methanolischer Natronlauge möglich. Analog zum Stand der Technik ist aber auch eine saure Verseifung mit Mineralsäuren möglich. Zur Durchführung der Druckverseifung wird auf EP-A-0 406 648 verwiesen. Bevorzugt wird Ausführungsweise 1, bei der das Perlpolymerisat vorgelegt und die wässrige Natronlauge zudosiert wird. Nach beendeter Verseifung wird das Harz ausgewaschen und bei 90°C mit 10%iger $H_2 \cdot SO_4$ umgeladen und anschließend neutral gewaschen. Zur Reinigung wird das Harz bei erhöhter Temperatur mit Wasser bzw. Dampf behandelt. Feinteilige Bestandteile können anschließend in einer Klassiersäule entfernt werden.

Die erfindungsgemäßen Perlpolymerisate aus Verfahrensschritt a) bzw. α) finden breite Anwendung als Adsorber.

Die erfindungsgemäßen schwachsauren, makroporösen Kationenaustauscher können eingesetzt werden u. a. in der Lebensmittelindustrie und zur Trinkwasseraufbereitung. Besonders geeignet sind sie zur Entkationisierung/ Enthärtung von Trinkwasser, z.B. in Haushaltsfiltern und zur Entkarboniserung von Trinkwasseer sowie Flüssigkeiten, die als Lebensmittel oder bei der Herstellung von Lebensmitteln verwendet werden. Weitere wichtige Anwendungen sind Entkationisierung/Enthärtung von Zuckerlösungen und Lösungen organischer Produkte, z.B. von Rüben-, Rohr- und Stärkezucker, bzw. Glyzerin, Gelatine usw., die Entsalzung von Wässern bei der Herstellung von ultrareinem Wasser, die Entkarboniserung von Brauchwasser (im Gleichstromverfahren), in der Verbundschaltung mit einem starksauren Kationenaustauscher zur Entsalzung von Wässern für die industrielle Dampferzeugung, als Pufferfilter hinter Entsalzungsanlagen zur Bindung von Alkalilonen, bei der Neutralisation von Regenerierabwässern aus Entsalzungsanlagen, in der Natrium-Form zur Bindung von Schwermetallen, wie Kupfer, Nickel oder Zink, aus Lösungen bei einem pH-Wert >5 in Abwesenheit von Calcium-Ionen und Komplexbildern.

Weiterhin können sie eingesetzt werden zur Entfernung von polaren oder unpolaren Verbindungen, Schwermetallen aus wässrigen oder organischen Lösungen der chemischen Industrie, Elektronikindustrie, Lebensmittelindustrie, Abfallentsorgungs- und Abfallverwertungsindustrie.

Insbesondere können die erfindungsgemäßen Perlpolymerisate und/oder Ionenaustauscher eingesetzt werden

- zur Entfernung von polaren Verbindungen aus wässrigen oder organischen Lösungen
- zur Entfernung von polaren Verbindungen aus Prozess-Strömen der chemischen Industrie
- zur Entfernung von organischen Komponenten aus wässrigen Lösungen oder Gasen beispielsweise von Aceton oder Chlorbenzol
- zur Entfernung von Schwermetallen oder Edelmetallen oder Arsen oder Selen aus wässrigen Lösungen.

Schwermetalle oder Edelmetalle im Sinne der vorliegenden Erfindung sind die Elemente des Periodensystems mit den Ordnungszahlen 22 bis 30, 42 bis 50 sowie 74 bis 83.

Weiterhin können die erfindungsgemäßen Ionenaustauscher und Perlpolymerisate eingesetzt werden zur Reinigung und Aufarbeitung von Wässern in der chemischen Industrie und Elektronikindustrie, sowie der Lebensmittelindustrie, insbesondere zur Herstellung von Reinstwasser, Reinstchemikalien und Stärke und deren Hydrolyseprodukte.

Weiterhin können die erfindungsgemäßen Ionenaustauscher und Perlpolymerisate zur Reinigung von Abwasserströmen der chemischen Industrie sowie von Müllverbrennungsanlagen verwendet werden. Eine weitere Anwendung der erfindungsgemäßen Adsorber stellt die Reinigung von Sickerwässern aus Deponien dar.

Weiterhin können die erfindungsgemäßen Ionenaustauscher und Perlpolymerisate zur Aufbereitung von Trinkwasser oder Grundwässern eingesetzt werden.

Die erfindungsgemäßen Perlpolymerisate und/oder Ionenaustauscher können aber auch als Ausgangsstoff für weitere Poly(meth)acrylsäurederivate dienen.

Beispielhaft seien genannt:

- Umsetzung mit 1-N,N-Dimethylamino-3-aminopropan (Amin Z) zu Acrylamidharzen. Die Produkte können ganz oder teilweise quaterniert werden und dienen der Wasser- und Zuckeraufbereitung.

- Umsetzung mit Polyaminen wie Diethylentriamin oder Triethylentetramin zu hochsulfatselektiven Harzen.

- Umsetzung mit Aminozuckern (z.B. N-Methylglucamin) zu borselektiven Harzen.

Die Herstellung der erfindungsgemäßen Ionenaustauscher erfolgt in mehreren Schritten und soll an Hand nachfolgender Beispiele erläutert werden.

## Beispiele

### Beispiel 1

Die Polymerisation erfolgte in einem 3 Liter-Glasplanschliffgefäß mit breitem Planschliffgefäßrührer, Pt 100-Temperaturfühler, Rückflusskühler, 500 ml Tropftrichter und Thermostat mit Steuereinheit.

Wässrige Phase

| | |
|---|---|
| 1,184 g | Hydroxyethylcellulose in |
| 126 ml | Vollentsalztes Wasser (VE-Wasser) |
| 196,8 g | Natriumchlorid (technisch) in |
| 592 ml | VE-Wasser |

(fortgesetzt)

| | |
|---|---|
| 0,414 g | Na-Salz von Naphthalinsulfonsäure-formaldehyd-Kondensat (95%ig) in |
| 77 ml | VE-Wasser |

Organische Phase

| | |
|---|---|
| 760 g | Acrylnitril |
| 40 g | Diethylenglykoldivinylether |
| 2,13 g | Dibenzoylperoxid (75%ig) |

Die Hydroxyethylcellulose wird ins VE-Wasser eingestreut und mindestens 8 h bis zum Ansetzen der wässrigen Phase gerührt. Im Polymerisationsgefäß wird die Natriumchlorid-Lösung vorgelegt. Dazu gibt man die Hydroxyethylcellulose-Lösung. Die Sulfonsäure-Lösung wird 15 min gerührt und dann ins Polymerisationsgefäß gegeben. Die komplette wässrige Phase rührt weitere 30 min.

Die organische Phase wird 15 min bei Raumtemperatur gerührt und dann bei stehendem Rührer zur wässrigen Phase gegeben. Anschließend steht der Ansatz ohne Rühren 20 min. Danach wird 20 min bei 170 rpm (Umdrehungen pro Minute) bei Raumtemperatur gerührt.

Unter Rühren wird innerhalb von 90 min auf 72°C erwärmt. Das Anspringen der Reaktion ist durch eine Änderung der Farbe (trüb nach milchig-weiß) zu erkennen. Die entstehende Reaktionswärme wird über den Außenmantel des Glasgefäßes, der mit dem Thermostaten verbunden ist, abgeführt. Reaktionsspitzen werden durch portionsweise Zugabe von kaltem Wasser abgefangen. Die gesamte Reaktionszeit bei 72°C beträgt 5 h. Anschließend wird innerhalb 1 h auf 90°C erwärmt und 5 h bei dieser Temperatur gehalten. Anschließend kühlt man den Ansatz ab und versetzt ihn mit 300 ml 10%iger wässriger Natriumbisulfitlösung und rührt 1 h bei 80°C. Danach wird das Harz auf einem 100 mesh-Sieb mit VE-Wasser ausgewaschen.

Ausbeute: 1180 ml Harz, Trockenausbeute: 98,4 %.
Effektive Korngröße: 0,278 mm, Gleichheitskoeffizient: 1,625 (optoelektronisch bestimmt).

VE-Wasser steht für vollentsalztes Wasser.

**Beispiel 2**

Vor der alkalischen Verseifung werden 500 ml Harz, nach Beispiel 1 hergestellt und in eine beheizbare Glasfrittensäule überführt. Bei 80°C wird 1 h getempert. Anschließend wird das Harz bei 80°C mit 1 Bettvolumen (BV) heißem VE-Wasser in 30 min eluiert. Danach wieder 1 h getempert. Die Temperung wird 4 mal, die Elution 3 mal durchgeführt.

Das so behandelte Harz wird in einem 3 Liter-$V_4$A-Autoklav mit Rührer und Temperaturregelung verseift.

| | |
|---|---|
| 500 ml | Harz (nutschfeucht) |
| 727 ml | VE-Wasser |
| 143 ml | NaOH 45%ig (1. Teil) |
| 655 ml | NaOH 45%ig (2. Teil) |
| 150 ml | VE-Wasser |
| 670 ml | VE-Wasser |

Harz und Wasser werden im Autoklaven vorgelegt und auf 150°C erwärmt. Innerhalb von 120 min wird der 1. Teil der NaOH zugepumpt. Anschließend wird in 100 min der 2. Teil der NaOH zugegeben und danach zügig 150 ml Wasser. Bei 150°C wird 3,5 h nachgerührt. Während des Zupumpens und der Nachrührzeit muss der Druck auf max. 4,5 bar gehalten werden. Entstehender Ammoniak wird über eine Glasvorlage, in der sich Wasser befindet, entspannt. Nach beendetem Nachrühren wird der Ansatz auf 100°C abgekühlt und dann in 40 min entspannt. Bei offenem Ventil werden 670 ml Wasser zugepumpt. Zum Schluss wird der Ansatz noch 1 h bei 100°C und offenem Ventil nachgerührt. Nach dem Abkühlen auf Raumtemperatur wird das Harz entnommen und auf dem Sieb ausgewaschen.

Danach wird das Harz in eine beheizbare Säule überführt. Die Umwandlung in die H-Form erfolgt bei 90°C mit 2 BV 10%iger $H_2SO_4$. Das erste BV wird innerhalb 1 h zugegeben, das 2. BV lässt man 4 h auf dem Harz stehen. Anschließend wird das Harz bei 90°C mit Wasser neutral gewaschen.
Volumen H-Form (1050 ml).
Effektive Korngröße: 0,49 mm, Gleichheitskoeffizient: 1,67.
Totalkapazität: 4,76 eq/l.
Volumenänderung: H/Na-Form (66%), H/Ca-Form (-2%).
Quellwasser: 49,7%, Trockengewicht: 371 g/l, Schüttdichte: 738 g/l.

Zur weiteren Reinigung wird das nutschfeuchte Harz mit dem gleichen Volumen VE-Wasser im Autoklaven ($V_4A$) vorgelegt. Der Ansatz wird auf 150 °C erwärmt und bei dieser Temperatur 5 h gerührt. Das im Autoklaven befindliche Wasser wird über ein Frittenrohr hinausgedrückt und durch die gleiche Menge frisches Wasser mittels Vakuum bei stehendem Rührer ersetzt. Anschließend wird wieder auf 150 °C erwärmt und die Reinigung unter Rühren wiederholt. Insgesamt wird das Harz 3 x bei 150 °C je 5 h mit Wasser behandelt. Anschließend wird auf Raumtemperatur abgekühlt und das Harz auf dem Sieb ausgewaschen.

**Beispiel 3**

Das Harz wurde mit folgenden Änderungen, wie im Beispiel 1 polymerisiert:

Vernetzer: 38 g Diethylenglykoldivinylether, 29,6 g Divinylbenzol (81%ig)
Polymerisationstemperatur 1. Stufe: 70°C,
Rührerdrehzahl: 160 rpm,
Ausbeute: 1120 ml Harz, Trockenausbeute: 90,6%.
Effektive Korngröße: 0,421 mm, Gleichheitskoeffizient: 1,585 (optoelektronisch bestimmt).

Verseifung erfolgte wie in Beispiel 2 mit 750 ml nutschfeuchtem Harz.
Volumen H-Form (1420ml).
Effektive Korngröße: 0,56 mm, Gleichheitskoeffizient: 1,48.
Totalkapazität: 4,62 eq/1.
Volumenänderung: H/Na-Form (68%), H/Ca-Form (2%).
Nutzkapazität: 1,95 eq/1 (Gleichstrommethode mit Leverkusener Rohwasser, Regeneration mit 90 g/l HC1).

**Beispiel 4**

Das Harz wurde mit folgenden Änderungen, wie im Beispiel 1 polymerisiert:

Vernetzer: 32 g Butandioldivinylether,
organische Phase mit 0,12 g Resorcin,
Polymerisationstemperatur 1. Stufe: 70°C,
Rührerdrehzahl: 160, nach 7 min bei 70°C auf 180 rpm erhöht,
Ausbeute: 1290 ml Harz, Trockenausbeute: 91,2%.
Effektive Korngröße: 0,427 mm, Gleichheitskoeffizient: 1,575 (optoelektronisch bestimmt).

Verseifung erfolgte wie in Beispiel 2 mit 500 ml nutschfeuchtem Harz.
Volumen H-Form (1060 ml).
Effektive Korngröße: 0,569 mm, Gleichheitskoeffizient: 1,586.
Totalkapazität: 4,28 eq/1.
Volumenänderung: H/Na-Form (66%).

Charakterisierung der Copolymeren

Copolymere werden am besten durch ihre Copolymerisationsparameter $r_i$ definiert. In einem kinetischen Modell stellen die Parameter Verhältnisse von Geschwindigkeitskonstanten der Anlagerung von konkurrierenden Monomeren an ein Polymerradikal dar.

$$PA\bullet + A \xrightarrow{k_{AA}} PA\bullet$$

$$PA\bullet + B \xrightarrow{k_{AB}} PB\bullet$$

$$PB\bullet + A \xrightarrow{k_{BA}} PA\bullet$$

$$PB\bullet + B \xrightarrow{k_{BB}} PB\bullet$$

Die entsprechenden kinetischen Gleichungen lauten:

$$v_{AA} = k_{AA} [PA] [A]$$

$$v_{AB} = k_{AB} [PA] [B]$$

$$v_{BA} = k_{BA} [PB] [A]$$

$$v_{BB} = k_{BB} [PB] [B]$$

Bei einer binären Copolymerisation von Monomer A und Monomer B wird das System durch zwei Gleichungen beschrieben:

$$r_A=k_{AA}/k_{AB} \qquad \text{und} \qquad r_B = k_{BB} / k_{BA}$$

Die momentane Zusammensetzung des Polymeren ergibt sich zu:

$$d[A] / d[B] = \frac{1 + r_A ([A]/[B])}{1 + r_B ([B]/[A])}$$

Die Auswertung der obigen Gleichung erfolgt am besten in der integrierten Form nach Meyer-Lowry als Funktion des Umsatzes (George Odian, Principles of Polymerization, John Wiley & Sons, 1981, Seite 464).

Im Falle der vernetzenden Copolymerisation mit einem bifunktionellen Vernetzer V anstelle von Monomer B erhält man folgende Gleichungen:

$$r_A = k_{AA} / 2k_{AV} \qquad \text{und} \qquad r_V = 2k_{VV} / k_{VA}$$

Der Faktor 2 in den beiden Gleichungen berücksichtigt, dass jedes Vernetzermolekül 2 polymerisationsaktive Doppelbindungen besitzt.

Die Gesamtreaktion wird durch die beiden Geschwindigkeitskonstanten $k_{AA}$ und $k_{VV}$ und die beiden Copolymerisationsparameter $r_A$ und $r_V$ beschrieben. Die Geschwindigkeitskonstanten $k_{AA}$ und $k_{VV}$ beeinflussen die Gesamtreaktionsgeschwindigkeit, aber nicht die Zusammensetzung des Colpolymeren. Da in der Regel das Monomere A gegenüber dem Vernetzer V in großem Überschuss vorliegt, wird die Einbaurate des Vernetzers in erster Linie von dem Parameter $r_A$ bestimmt. Der Einfluss des Parameters $r_V$ ist von untergeordneter Bedeutung und kann vernachlässigt werden. Im Idealfall hat der Parameter $r_A$ den Wert 0,5.

| | |
|---|---|
| $k_{AA}$ | $r_A$ |
| $r_V$ | $k_{VV}$ |

Bestimmung des Copolymerisationsparameters $r_A$

Die Polymerisation wurde mit der Rezepturzusammensetzung aus Beispiel 1 mit folgenden Änderungen durchgeführt:

- Vernetzermenge: 1, 2 und 4 Gew.-% Diethylenglykoldivinylether,
- Erhöhung der Hydroxyethylcellulosemenge um 35%,
- Aufheizen auf 65 °C (Polymerisationstemperatur) in 10 min,
- Rührerdrehzahl: 230 rpm, nach 1 h auf 210 - 220 rpm,
- interner Standard: Toluol (1% bezogen auf Gesamtmonomermenge).

In regelmäßigen Abständen wurden Proben gezogen, die in der 5- bis 10-fachen Menge Dimethylsulfoxid (DMSO) eingetragen und unter Rühren im Eisbad homogenisiert wurden. Die DMSO-haltigen Proben wurden über Nacht gerührt und anschließend zur Bestimmung der Restmonomerzusammensetzung gaschromatografisch analysiert.

- Fused-Silica-Kapillartrennsäule mit 30 m Länge, Innendurchmesser 320µm, filmdicke 0,2 µm.
- Temperatur Einspritzblock: 350°C.
- Temperaturrampe: 3 min bei 50°C, dann mit 20 K/min auf 250°C, 5 min bei 250°C halten.

Die Retentionszeiten der einzelnen Komponenten betragen:

- Acrylnitril 5,60 min
- Toluol 6,12 min
- DMSO 10,79 min
- Diethylenglykoldivinylether 10,33 min

Für die Auswertung wurden die Messpunkte bis ca. 30 % Polymerisationsumsatz verwendet und die Parameter an die Meyer-Lowry-Gleichung angepasst. Dazu trägt man den molaren Umsatz gegen die Zusammensetzung der Monomerphase auf.
Für den Copolymerisationsparameter $r_A$ erhält man den Wert 0,47 ± 0,015.
Ein ternäres System mit einem Monomeren (hier Acrylnitril, Index A) und zwei Vernetzern (Index 1 und 2) wird durch folgende Parameter vollständig charakterisiert:

| | | |
|---|---|---|
| $k_{AA}$ | $r_{A1}$ | $r_{A2}$ |
| $r_{1A}$ | $k_{11}$ | $r_{2A}$ |
| $r_{2A}$ | $r_{21}$ | $k_{22}$ |

Ist die Konzentration der Vernetzer wesentlich kleiner als die Monomerkonzentration, vereinfacht sich das System. Die Zusammensetzung der Copolymeren wird im wesentlichen durch die beiden Parameter $\mathbf{r_{A1}}$ und $\mathbf{r_{A2}}$ bestimmt, d.h. das ternäre System Acrylnitril/Diethylenglykoldivinylether/Divinylbenzol verhält sich wie zwei getrennte binäre Systeme Acrylnitril/Diethylenglykoldivinylether und Acrylnitril/Divinylbenzol. Die beiden Vemetzer beeinflussen sich praktisch nicht.
Für Acrylnitril/Diethylenglykoldivinylether ist $\mathbf{r_{A1}}$ = 0,635 ± 0,015 für Acrylnitril/Divinylbenzol (m-Isomer) ist $\mathbf{r_{A2}}$ = 0,05 ± 0,001 und für Acrylnitril/Divinylbenzol (p-Isomer) ist $\mathbf{r_{A3}}$ = 0,028 ± 0,01.

Definition homogenes Netzwerk

Die Netzwerke der erfindungsgemäßen Perlpolymerisate und Ionenaustauscher werden im wesentlichen durch den Copolymerisationsparameter $\mathbf{r_A}$ bestimmt. Für einen bifunktionellen Vernetzer ist er idealtypisch 0,5. Für homogene Netzwerke im Sinne der Erfindung liegt $\mathbf{r_A}$ zwischen 0,3 und 0,8, bevorzugt 0,4 bis 0,65 (bifunktioneller

Vernetzer). Durch Zugabe von aliphatischen Nitrilen im Sinne der vorliegenden Erfindung erhält man überraschenderweise Copolymerisationsparameter $\mathbf{r_A}$, die dem Idealwert von 0,5 sehr naheliegen, was für weitestgehend homogene Netzwerke spricht.

Darstellungen der Parameter in Matrixform

Die Matrizes (2x2 für binäre Copolymerisation mit Monomer A plus Vernetzer V; 3x3 für ternäre Copolymerisation mit Monomer A, Vernetzer 1 und 2) sollen schematisch / anschaulich die Parameter darstellen, die man zur kinetischen Beschreibung der beiden Copolymerisationen braucht. Die Copolymerisationsparameter ri (binär) bzw. rij (ternär) stellen Verhältnisse von Geschwindigkeitskonstanten dar, mit der sich 2, 3 oder mehr Monomere an ein wachsendes Polymerradikal anlagern. Die Reaktivität (Geschwindigkeitskonstante) dieses Polymerradikals mit einem Monomeren wird - so die vereinfachende Annahme - ausschließlich durch das zuletzt eingebaute Monomere (in unserem Fall Acrylnitril oder ein Vernetzer) bestimmt. Im Fall der binären Copolymerisation haben wir 2 Polymerradikale, an die sich jeweils 2 Monomere (hier Acrylnitril und Vernetzer) anlagern können. Das heißt es gibt 4 Geschwindigkeitskonstanten (2x2). Bei der ternären Copolymerisation (hier Acrylnitril plus Vernetzer 1 und 2) haben wir 3 Polymerradikale, die mit 3 Monomeren (Acrylnitril plus Vernetzer 1 und 2) reagieren können. Das heißt, es gibt hier 9 Geschwindigkeitskonstanten (3x3). Die Anlagerung eines Monomeren an sein Polymerradikal, z.B. Acrylnitril an das Polymerradikal mit endständiger Acrylnitrilgruppe, führt zu keiner Änderung der Zusammensetzung, bestimmt aber die Bruttogeschwindigkeit der Polymerisation. Hohe ki-Werte (binär) bzw. kii-Weae (ternär) bedeuten eine rasche Polymerisation, niedrige eine langsame.

**Patentansprüche**

**1.** Verfahren zur Herstellung von Ionenaustauschern, dadurch gekennzeichnet, dass man

a) ungesättigte, aliphatische Nitrile mit Di- oder Polyvinylethern als Vernetzern und zusätzlich Initiatoren in Suspension in Gegenwart von Schutzkolloiden jedoch nicht in seed/feed- oder Saatzulaufverfahren zu Perlpolymerisaten polymerisiert und

b) diese zu Ionenaustauschern funktionalisiert.

**2.** Verfahren gemäß Anspruch 1, dadurch gekennzeichnet, dass man weitere Monovinylverbindungen und/oder Vernetzer und/oder Porogen zur Polymerisationsreaktion hinzufügt.

**3.** Verfahren gemäß der Ansprüche 1 und 2, dadurch gekennzeichnet, dass ungesättigte, aliphatische Nitrile der allgemeinen Formel (I)

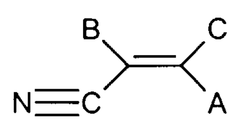

(I),

worin
A, B und C jeweils unabhängig voneinander für Wasserstoff, Alkyl oder Halogen stehen,
eingesetzt werden.

**4.** Verfahren gemäß Anspruch 1, dadurch gekennzeichnet, dass als Divinylether Verbindungen der allgemeinen Formel (II)

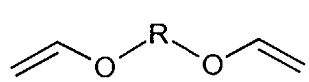

(II),

worin

R für einen Rest der Reihe $C_nH_{2n}$, $(C_mH_{2m}\text{-}O)_p\text{-}C_mH_{2m}$ oder $CH_2\text{-}C_6H_4\text{-}CH_2$ steht und n ≥2, m = 2 bis 8 und p ≥2 stehen oder dass als
Polyvinylether Trivinylether von Glycerin, Trimethylolpropan oder
Tetravinylether des Pentaerythrits eingesetzt werden.

**5.** Verfahren zur Herstellung schwach saurer Kationenaustauscher, dadurch gekennzeichnet, dass man

α) ungesättigte, aliphatische Nitrile der allgemeinen Formel (I) gemäß Anspruch 3 mit Di- oder Polyvinylethern als Vernetzern in Suspension in Gegenwart von Schutzkolloiden zu Perlpolymerisaten polymerisiert,

β) das Perlpolymerisat alkalisch verseift, und

γ) die Perlpolymerisate von der Salz- in die H-Form mit verdünnter Mineralsäure umlädt.

**6.** Perlpolymerisate hergestellt nach dem Verfahrensschritt a) gemäß Anspruch 1.

**7.** Verwendung der Perlpolymerisate gemäß Anspruch 6 als Adsorberharze.

**8.** Ionenaustauscher hergestellt nach dem Verfahren gemäß Anspruch 1.

**9.** Schwach saure Kationenaustauscher hergestellt nach dem Verfahren gemäß Anspruch 5.

**10.** Verwendung der Perlpolymerisate gemäß Anspruch 6 und der Ionenaustauscher gemäß Anspruch 1 zur Aufbereitung von Trinkwasser oder Grundwässern, als Ausgangsstoffe für weitere Poly(meth)acrylsäurederivate sowie zur Entfernung von polaren oder unpolaren Verbindungen oder Schwer- oder Edelmetallen oder Arsen oder Selen aus wässrigen oder organischen Lösungen der chemischen Industrie, Elektronikindustrie, Lebensmittelindustrie, Abfallentsorgungs- und Abfallverwertungsindustrie.